# EUROPÄISCHE PATENTSCHRIFT

(11) **EP 1 028 927 B1**
(45) Veröffentlichungstag und Bekanntmachung des Hinweises auf die Patenterteilung: **06.12.2006**
(21) Anmeldenummer: 98956856.3
(22) Anmeldetag: 21.10.1998
(51) Int. Cl.: C04B 35/597, C04B 35/593

(54) **SILIZIUMNITRIDKERAMIK MIT HOHER MECHANISCHER FESTIGKEIT BEI RAUM- UND ERHÖHTER TEMPERATUR**
SILICON NITRIDE CERAMIC WITH A HIGH MECHANICAL STABILITY AT ROOM TEMPERATURE AND ABOVE
CERAMIQUE AU NITRURE DE SILICIUM DE GRANDE RESISTANCE MECANIQUE A UNE TEMPERATURE AMBIANTE ET ELEVEE

(30) Priorität: 31.10.1997 DE 19748225
(43) Veröffentlichungstag der Anmeldung: 23.08.2000
(73) Patentinhaber: CeramTec AG Innovative Ceramic Engineering, 73207 Plochingen (DE)
(72) Erfinder: RIEDEL, Günter, D-65779 Kelkheim (DE); KRÜNER, Hartmut, D-65817 Eppstein (DE); STEINER, Matthias, D-90552 Röthenbach (DE); STINGL, Peter, D-91207 Lauf (DE)
(74) Vertreter: Uppena, Franz
(86) Internationale Anmeldenummer: PCT/EP1998/006660
(87) Internationale Veröffentlichungsnummer: WO 1999/023047

(56) Entgegenhaltungen:
- EP-A- 0 603 787
- T. EKSTRÖM ET AL.: "Dense single-phase beta-sialon ceramics by glass-encapsulated hot isostatic pressing" JOURNAL OF MATERIALS SCIENCE, Bd. 24, Nr. 5, Mai 1989, Seiten 1853-1861, XP000008274 London, GB

## Beschreibung

Die vorliegende Erfindung betrifft keramische Materialien aus Siliciumnitrid mit Sinteradditiven in Form von Yttrium- und Aluminiumoxid, die hohe mechanische Festigkeiten bei Raumtemperatur und bei erhöhten Temperaturen besitzen.

Es ist bekannt, daß Siliciumnitridkeramiken mit feinkristallinen, nadelförmigen β-Si₃N₄-Kristalliten durch Minimierung von festigkeitsbegrenzenden Strukturdefekten hohe Raumtemperaturfestigkeiten aufweisen können. Gemäß EP-A-0 610 848 A2 wird dies durch Optimierung des Herstellungsverfahrens, insbesondere des Sinterprozesses erreicht. Yoshimura (Journ. Ceram. Soc. Japan; 103 (1995)1872-1876) beschreibt einen Si₃N₄-Werkstoff mit Sinteradditiven in Form von Y₂O₃ und Al₂O₃, der eine besonders feinkristalline Struktur, bestehend aus prismatischen und abgerundeten Kristalliten, mit einer mittleren Kornbreite von 0,1 µm und einer mittleren Kornlänge von 0,5 µm, besitzt. Das Material enthält 85 Vol.% β-Si₃N₄-Kristallite und 15 Vol.% α-Si₃N₄. Diese Werkstoffe stellen β'-α'-Sialon-Komposite dar, die eine vergleichsweise schlechte Sinterreaktivität besitzen (Hoffmann; M.J.; MRS Bulletin Febr. 1995, 28-32). Sie werden unterhalb der Temperatur gesintert, die zur vollständigen α-β-Umwandlung führt. Nachteilig sind dann entweder lange Sinterzeiten oder zur vollständigen Verdichtung sind hohe Sinteradditiv-bzw. Flußmittelgehalte erforderlich. Im letzteren Fall muß dann der relativ hohe Anteil an Glasphase mit Hilfe von nachfolgenden Langzeit-Temperprozessen durch Kristallisation reduziert werden, um hohe Festigkeiten bei erhöhten Temperaturen zu erreichen.

Die von Yoshimura angegebenen Festigkeiten betrugen bei Raumtemperatur 2000 MPa, bei 800°C 1800 MPa und bei 1200°C 1000 MPa (Meßmethode: 3-Punkt-Biegeprüfung; führt zu höheren Festigkeitsprüfergebnissen als die bei Untersuchungen des europäischen Schrifttums meistens verwendete 4-Punkt-Biegeprüfung). Die Bruchzähigkeit K_{lc} wird mit 5,8 Mpa.m^{½} beziffert. Das bedeutet, daß das Material sehr hohen mechanischen Kurzzeitbelastungen widersteht. Wegen des relativ niedrigen Widerstandes gegenüber Rißausbreitung (niedriger Klc-Wert) kann das Langzeitbelastungsverhalten als ungünstig eingeschätzt werden.

In der EP-A-0 520 211 wird der Zusatz von Molybdänsilicid zu Siliciumnitridkeramik beschrieben, um die Festigkeit bei erhöhten Temperaturen und die Oxidationsstabilität zu erhöhen. Das Festigkeitsniveau ist mit max. 763 MPa bei Raumtemperatur relativ niedrig; als Anwendung werden Schneidwerkzeuge beansprucht.

Aus der EP-A-0 603 787 ist ein Formteil aus Si₃N₄ mit Sinteradditiven in Form von Yttrium- und Aluminiumoxid bekannt, bei dem das Gewichtsverhältnis Y₂O₃/Al₂O₃ im Bereich von 1,1 bis 3,4 liegen soll. Die mechanischen Festigkeiten der Keramik sind bei Raumtemperatur größer als 850 MPA und bei einer Temperatur von 800°C größer als 800 MPa.

Aufgabe der vorliegenden Erfindung ist es, ein Material herzustellen, das im Vergleich zum Stand der Technik verbesserte mechanische Festigkeiten sowohl bei Raumtemperatur als auch im Temperaturbereich bis 1000°C besitzt.

Gelöst wird diese Aufgabe durch die Merkmale des Hauptanspruchs. Vorzugsweise Ausgestaltungen der erfindungsgemäßen Lösung sind in den Unteransprüchen charakterisiert.

Die erfindungsgemäße Lösung sieht Formteile vor, die wenigstens 87 Gew.-% Siliziumnitrid und bis zu 13 Gew.-% einer Additivkombination aus Al₂O₃ und Y₂O₃ enthalten, wobei in der Ausgangszusammensetzung des Masseansatzes von Y₂O₃/Al₂O₃-Verhältnissen kleiner als 1,1, vorzugsweise von Y₂O₃/Al₂O₃-Verhältnissen von 0,2 bis 1,09 ausgegangen wird. 1% bis 20 % des Y₂O₃-Anteiles können dabei durch ein anderes Element der Gruppe IVb des Periodensystemes bzw. durch dessen Oxid substituiert werden. Die Formteile können bis zu 1,0 Gew.-% HfO₂ und/oder ZrO₂ enthalten. Sie besitzen vorzugsweise eine Dichte von > 98 % der theoretischen Dichte. Die Biegefestigkeit der erfindungsgemäßen Formteile beträgt bei Raumtemperatur ≥ 1100 MPa und bei 1000°C ≥ 850 MPa.

Die erfindungsgemäßen Formteile entsprechen der Formel Si_{6-z}Al_{z}O_{z}N_{8-z}. Der Substitutionsgrad z beträgt dabei 0,20 bis 0,60, vorzugsweise von 0,22 bis 0,54, insbesondere von 0,3 bis 0,35.

Bei der Herstellung der erfindungsgemäßen Formteile vermindert sich während des Sinterprozesses der Al₂O₃-Anteil in der amorphen Phase gegenüber der Ausgangszusammensetzung der Sinteradditive einschließlich des SiO₂-Anteiles des Si₃N₄-Rohmaterials um den Faktor 0,2 bis 0,7. Dies entspricht einer Senkung des Al₂O₃-Anteils um 30 bis 80 %.

Zur Herstellung der Formteile wurden Masseansätze mit bis zu 13 Gew.-% Sinteradditiven und den in Tabelle 1 dargestellten Yttrium- und Aluminiumoxidanteilen (bezogen auf die Additivgesamtmenge einschließlich SiO₂) und einem Siliciumnitridrohmaterial, beispielsweise ein Siliciumnitridrohmaterial, das aus dem Diimidprozeß abgeleitet wurde und einen Ausgangssauerstoffgehalt von 1,3 % aufwies, bereitgestellt. Mit diesem Ausgangssauerstoffgehalt des Si₃N₄-Pulvers und dessen Zunahme während der wäßrigen Dispergierung sowie der Mahlung in der Rührwerkskugelmühle ergaben sich die in Tabelle 1 und Bild 1 dargestellten Additivzusammensetzungen des Dreistoffsystemes SiO₂-Y₂O₃-Al₂O₃. Nach der Plastifizierung und Sprühtrocknung der Suspensionen erfolgte das isostatische Pressen von zylindrischen Formkörpern bei 2000 bar. Die Preßteile wurden 1h bei 600°C ausgeheizt und nachfolgend bei Temperaturen zwischen 1800 und 1900°C, vorzugsweise bei Temperaturen zwischen 1850 und 1875°C in einem Gasdrucksinterofen mit Graphitheizelementen bei einem maximalen Stickstoffdruck von 80 bar gesintert.

Aus den gasdruckgesinterten Materialien wurden mittels Schleifen, Läppen und Polieren Probekörper der Abmessungen 3 x 4 x 45 mm hergestellt und gemäß DIN 51110 mit der Vierpunktbiegeprüfung bei Raumtemperatur und bei 1000°C hinsichtlich Biegefestigkeit geprüft.

Die Bestimmung der Wärmeleitfähigkeit erfolgte an Scheiben von 12 mm Durchmesser und 1 mm Dicke mit der Xenon-Flash-Methode.

Mit der automatischen Bildanalyse von REM-Aufnahmen wurde die Kristallitgrößenverteilung plasmageätzter Anschliffe ermittelt. Die mikroanalytischen Untersuchungen der Glasphase und Si₃N₄-Kristallite erfolgte mit dem Rastertransmissions-Elektronenmikroskop (STEM) in Kombination mit der energiedispersiven Röntgenspektroskopie (EDX) und der Elektronenenergieverlustspektroskopie (EELS) von Ar⁺-ionengeätzten Dünnschliffpräparaten.

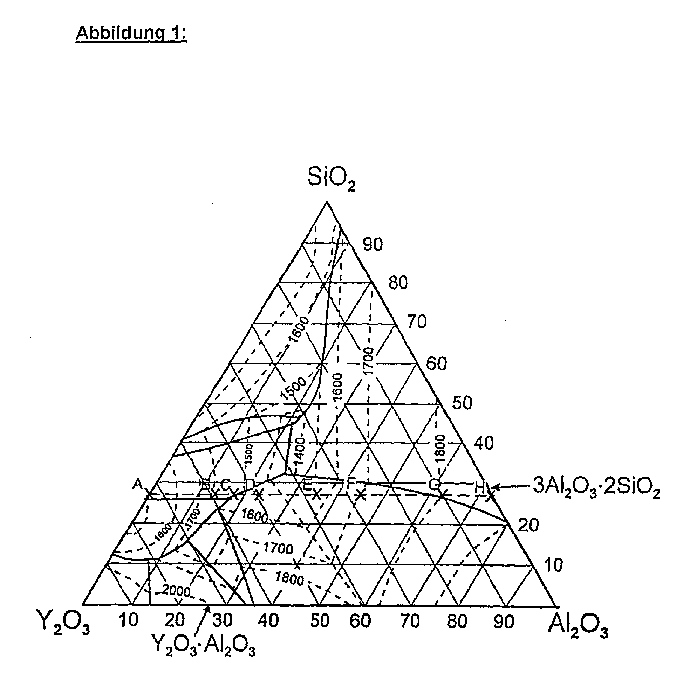

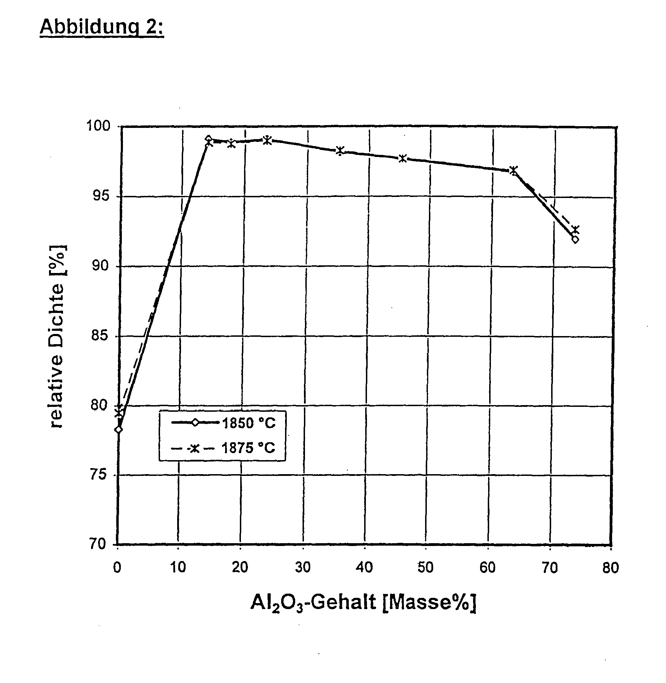

Die mit den unter einem Stickstoffdruck von 80 bar bei 1850°C und 1875°C erhaltenen Sinterdichten sind in Abbildung 2 in Abhängigkeit vom Al₂O₃-Gehalt der Sinteradditive dargestellt. Der Korrelationskoeffizient zwischen Dichte und Liquidustemperatur der Sinteradditive des Systems SiO₂-Y₂O₃-Al₂O₃ beträgt in diesem Fall 0,93 und bestätigt den Einfluß der Temperatur der Schmelzphasenbildung auf die Sinterverdichtung.

Es zeigte sich, daß Sinterdichten größer als 97,5 % der theoretischen Dichte (TD), die Voraussetzung für hohe mechanische Festigkeiten sind, in einem relativ großen Bereich der Y/Al-Oxidverhältnisse erreicht werden können. Diese stellen auch das Hauptkriterium für die Werkstoffauswahl dar.

Tabelle 1 enthält die mit den unterschiedlichen Sintertemperaturen erzielten mechanischen Festigkeiten bei Raumtemperatur und bei einer Prüftemperatur von 1000°C sowie Meßergebnisse der Wärmeleitfähigkeitsprüfung (WLF) und des linearen thermischen Ausdehnungskoeffizienten (WAK) im Bereich von 21 - 1000°C.

Wegen der für alle Werkstoffzusammensetzungen angewendeten gleichen Sinterbedingungen (Temperatur/Druck/Zeitbedingungen) liegt keine optimale Anpassung dieser Parameter an das Verdichtungsverhalten der unterschiedlichen Materialien vor. Die mechanischen Eigenschaften bei Raumtemperatur werden deshalb neben der Mikrostruktur auch von der erreichten Sinterverdichtung bestimmt. In Analogie zu anderen Versuchsreihen zeigte sich, daß die Probekörper mit maximaler Dichte nicht immer die höchsten Festigkeiten aufwiesen . Homogen im Gefüge verteilte Poren mit einem Durchmesser unterhalb der kritischen Defektgröße können zur Absorption von Bruchenergie und Rißverzweigung führen.

Insgesamt konnten trotz sehr stark variierter Werkstoffzusammensetzung hohe mechanische Raumtemperaturfestigkeiten erhalten werden, die durch Optimierung der Sinterparameter noch erhöht werden können.

Überraschenderweise wurden die höchsten Festigkeiten bei Prüftemperaturen von 1000°C nicht mit Werkstoffen erreicht, die hohe Y₂O₃-Anteile (Probe A, B, C, D) aufweisen, sondern bei Werkstoffen mit einem Y₂O₃/Al₂O₃-Verhältnis in der Größenordnung von 0,6 - 1,1 (siehe Tabelle 1).

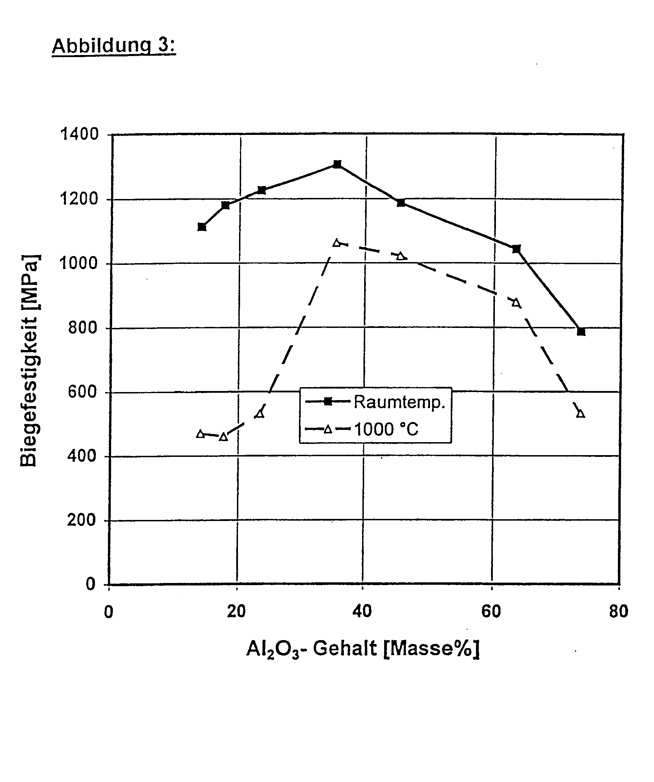

In Abbildung 3 werden die Biegefestigkeiten in Abhängigkeit vom Al₂O₃-Anteil der Sinteradditive (einschließlich SiO₂) dargestellt, die mit einer Maximaltemperatur von 1875°C gesintert worden waren. Aus den Abbildungen 2 und 3 ergibt sich, daß mit Al₂O₃-Gehalten im Bereich von 15 - 35 Masseprozent trotz hoher Sinterdichten und Raumtemperaturfestigkeiten stark erniedrigte Ergebnisse der Festigkeitsprüfung bei 1000°C erhalten wurden.

Es ist bekannt, daß die amorphe Phase in Si₃N₄-Materialien mit Sinteradditiven stets die Si₃N₄-Kristallite umhüllt und je nach Mengenanteil auch in Tripelpunkten und weiten Korngrenzenbereichen angeordnet ist. Mit Ausnahme der Probe H, die keinen Y₂O₃-Zusatz enthielt, konnte dies für die Proben A bis G bestätigt werden. In Probe H wurden zum Teil zwischen den Si₃N₄-Kristalliten und in den Tripelpunkten kristalline Aluminiumsilikatphasen festgestellt. In allen anderen Präparaten ist neben β-Siliciumnitrid keine weitere kristalline Phase enthalten.

Die Größe der in den Tripelpunkten vorliegenden amorphen Phasenbereiche liegt in der Größenordnung von 200 - 1000 nm und ist damit der energiedispersiven Röntgenspektroskopie zugänglich.

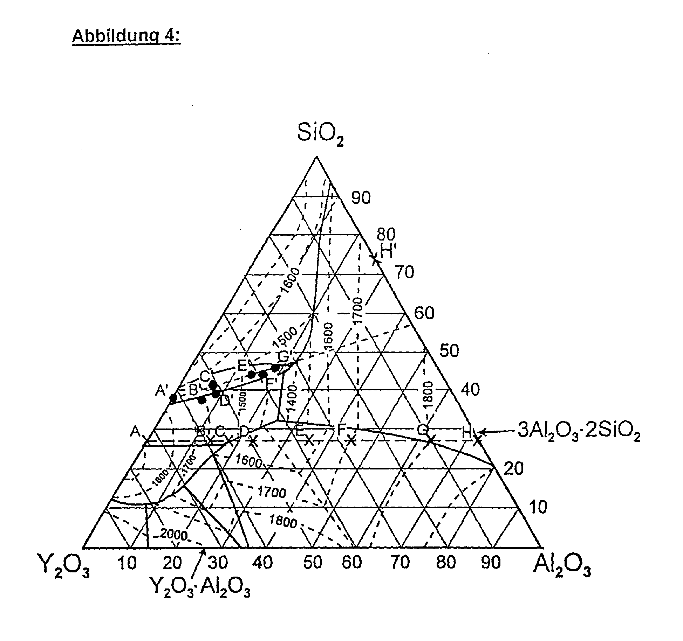

Die mittels STEM/EDX erhaltenen Elementanalysen der Korngrenzenphasen in den Werkstoffen A-H sind in Tabelle 3 dargestellt. Trägt man die ermittelten Oxidmassenanteile in das Phasendiagramm SiO₂-Y₂O₃-Al₂O₃ ein, so zeigt sich, daß die amorphe Phase gegenüber der Ausgangszusammensetzung der Sinteradditive (incl. SiO₂) während des Flüssigphasensinterprozesses mit SiO₂ (incl. N) angereichert wurde (Abbildung 4). An Probe B mit einem Al₂O₃-Gehalt von 14 % wurde mittels EELS ein Verhältnis Sauerstoff zu Stickstoff von 6 : 1 in der amorphen Phase ermittelt. Bei allen yttrium- und aluminiumoxidhaltigen Stoffen erfolgte außerdem die durch das Lösen von Al³⁺ im Si₃N₄-Gitter bedingte Abreicherung von Al₂O₃. Dabei sind die Glasphasenzusammensetzungen der Proben A-G auf einer im Winkel von ca. 20°C gegenüber der Ausgangszusammensetzung geneigten Linie angeordnet.

Die kristalline Silikatphase von Probe H enthält ca. 74 Masse% SiO₂ und 26 Masse% Al₂O₃ und liegt bei den angewendeten Sintertemperaturen im Ausscheidungsfeld von Mullit. Die Y-reichen Ausgangsmischungen C und D führen zu amorphen Phasen, deren Lage im Phasendiagramm (unter Vernachlässigung des N-Einflusses) zu höheren Liquidustemperaturen verschoben ist, was nach bisherigem Kenntnisstand einen positiven Einfluß auf die Hochtemperaturfestigkeit haben sollte (C' - ca. 1580°C; D' - ca. 1575°C). Im Falle der Ausgangszusammensetzung B bleibt die Liquidustemperatur nahezu unverändert (Abbildung 4).

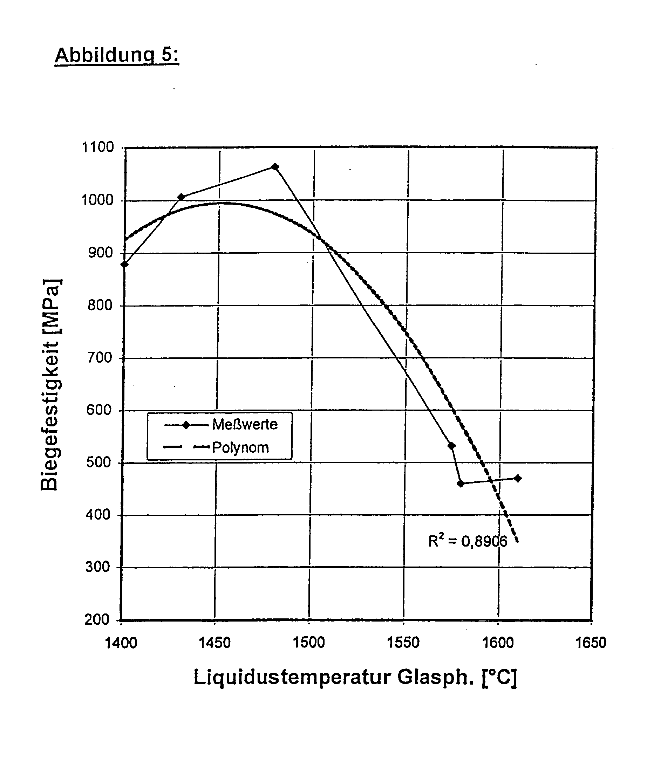

Die Proben E, F und G hingegen liegen nach der Sinterung bei niedrigeren Liquidustemperaturen: E' - ca. 1480°C; F' - ca. 1430°C; G' - ca.1400°C. Falls das Erweichungsverhalten der amorphen Phase signifikant für die Kurzeitbelastung der Biegefestigkeitsprüfung bei 1000°C ist, müßte dies eine deutlich negative Auswirkung auf die Meßergebnisse haben. Die Tabelle 1 und die Abbildung 5 zeigen jedoch, daß dieser Einfluß überraschenderweise gegenteilig ist.

Die STEM/EDX-Analyse der Si₃N₄-Kristallite zeigt, daß mit steigendem Al₂O₃-Ausgangsgehalt höhere Al-Anteile im Si₃N₄ gelöst werden (Tabelle 2).

Die erfindungsgemäß hergestellten Keramiken entsprechen der allgemeinen Formel Si_{6-z}Al_{z}O_{z}N_{8-z}. Die Substitutionsgrade der erfindungsgemäßen Keramiken liegen im Bereich von z = 0,22 (Probe B) und 0,54 (Probe H).

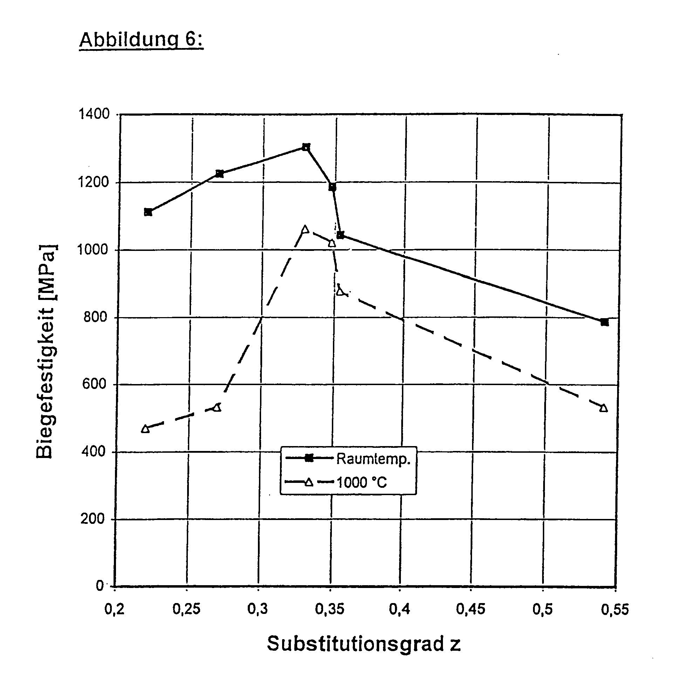

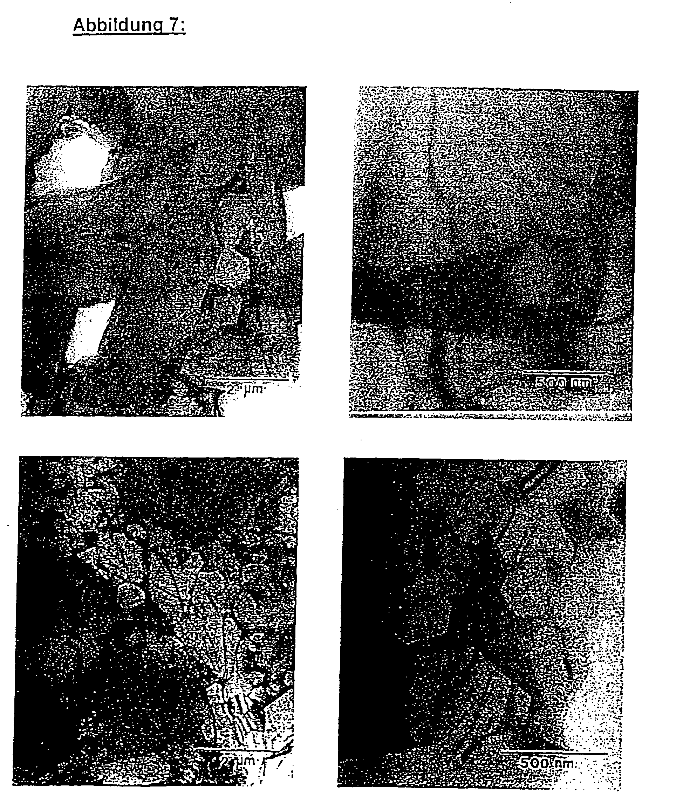

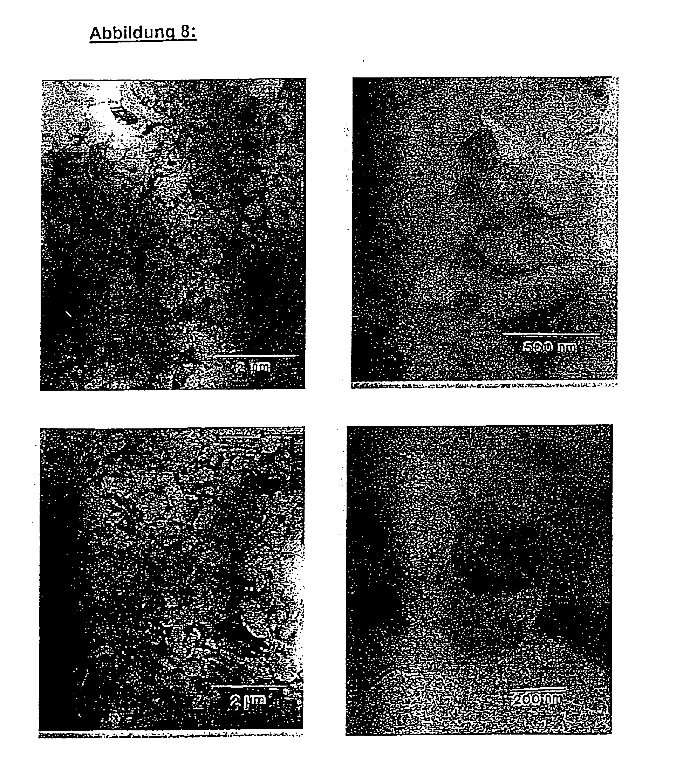

In Abbildung 6 ist die Abhängigkeit der mechanischen Festigkeit vom Substitutionsgrad dargestellt. Die höchsten Festigkeiten bei Raumtemperatur und bei 1000°C können erfindungsgemäß erhalten werden, wenn der Substitutionsgrad z im Bereich von 0,3 - 0,35 liegt.

Die mechanische Festigkeit, insbesondere bei erhöhten Temperaturen, wird auch durch thermische Spannungen, die durch die Unterschiede der thermischen Ausdehnungskoeffizienten von Siliciumnitrid und der amorphen Korngrenzenphase hervorgerufen werden, beeinflußt. Nach Meßergebnissen von Hyatt und Day (Journ. Amer. Ceram. Soc., 70 (1987) 10, C 283 - C 287) wird der Ausdehnungskoeffizient von Yttrium-Aluminium-Silikatgläsern bei SiO₂-Gehalten von 46 % bzw. 30 % bei veränderten Y₂O₃/Al₂O₃-Verhältnissen im Bereich von 1,5 - 3,1 bzw. von 1 - 2,75 nur relativ gering beeinflußt (Änderung des Ausdehnungskoeffizienten um + 0,8•10⁻⁶/K bzw. um + 0,9•10⁻⁶/K). Deshalb ist der Einfluß des möglicherweise veränderten Ausdehnungskoeffizienten der Komgrenzenphase bei den hier beschriebenen Materialien relativ gering.

Es ist bekannt, daß man in erster Näherung die im Si₃N₄ und den Sinteradditivkombinationen Y₂O₃ + MgO sowie Y₂O₃ + Al₂O₃ entstehenden flüssigen Phasen trotz Lösen von Stickstoff in der Schmelzphase während der Flüssigphasensinterung (4 - 8 Atom%) als Silikatgläser mit SiO₂ und Oxidzusätzen betrachten kann (K. Oda und T. Yoshio; Journ. Cer. Soc. Jap. Int., 79 (1989) p. 1502), wobei das Lösen von Stickstoff in Gläsern des Systems SiO₂-Y₂O₃-Al₂O₃ deren Glasübergangstemperaturen, Härte und Bruchzähigkeit erhöht und den WAK erniedrigt (R. E. Loehman; Journ. Amer. Cer. Soc., Sept. - Oct. 1979, 491 - 494). Dieser Einfluß sollte bei den Vergleichsproben und den erfindungsgemäßen Materialien im wesentlichen gleich sein. Im untersuchten Konzentrationsbereich von 30 - 45 Masseprozent Y₂O₃ fanden Oda und Yoshio (s.o.) mit steigendem Yttriumgehalt höhere Dichten, Glasübergangstemperaturen (870 - 893°C), höhere Härte und sinkende Bruchzähigkeit dieser Gläser. Diese Ergebnisse lassen sich aber überraschenderweise nicht auf die erfindungsgemäßen Keramiken übertragen. Mit den Liquidustemperaturen der Sinteradditive des Systemes SiO₂-Y₂O₃-Al₂O₃ können die bei 1000°C erhaltenen Prüfergebnisse der Biegefestigkeit auf diese Weise nicht erklärt werden.

Die Ursachen für diese überraschenden Eigenschaftsänderungen können daher neben dem unterschiedlichen Substitutionsgrad der Si₃N₄-Kristallite nur in den Mikrostrukturparametern liegen. Deshalb wurden Mikrostrukturuntersuchungen (Kristallitgrößenverteilung, Größe und Verteilung der amorphen Korngrenzenphaseund Fraktographie) an den gemäß der vorliegenden Erfindung hergestellten Keramiken durchgeführt.

Die mit dem Transmissions-Elektronenmikroskop in unterschiedlicher Vergrößerung (5000-, 10000-, bis teilweise 90000- fach) an Dünnschliffen angefertigten Gefügebilder ermöglichen insbesondere die Anordnung von amorpher sowie Si₃N₄-Phase darzustellen und wie oben beschrieben zu analysieren. Die visuelle Beurteilung dieser Bilder führt zu folgender Einschätzung:

| | |
|---|---|
| -Probe A (ohne Al₂O₃): | Restporosität mit 1 - 2 µm großen Poren; Glasphasen-bereiche ca. 500 nm breit und bis zu 1000 nm lang; Si₃N₄-Kristallite bis 2 µm Breite und 8 µm Länge; viele Spannungskonturen im Si₃N₄; vergleichsweise "grobkristallin" (Abbildung 7); |
| -Probe B (14 % Al₂O₃): | Glasphasenbereiche max. ca. 400 nm breit und ca. 800 nm lang; max. Kristallitbreite 1,5 - 2 µm; viele Spannungs-konturen im Si₃N₄; Gesamteindruck: weniger "grobkristallin" (Abbildung 7); |
| -Probe C und D: | ähnlich B; |
| -Probe E (35 % Al₂O₃): | Glasphasenbereiche max. ca. 200 nm groß (fein verteilt); max. Kristallitbreite 0,5 - 1 µm, max. Kornlänge 2 - 3,5 µm; Spannungskonturen schwach ausgeprägt; feinkristallin (Abbildung 8); |
| -Probe F (45 % Al₂O₃): nm | Glasphasenbereiche max. ca. 150 nm breit und ca.300 lang; max. Kristallitbreite 0,8 - 1,5 µm; vereinzelt Kristallite mit Spannungskonturen erkennbar; feinkristallin; |
| -Probe G (63 % Al₂O₃): teilt); | Glasphasenbereiche max. ca. 200 nm groß (fein ver-Kristallitbreite 0,5 - 1 µm, max. Kornlänge max. 4,5 µm; keine bzw. geringe Spannungskonturen erkennbar (Abbildung 8). |

Es ist erkennbar, daß die yttriumreichen Proben, die auch den geringeren Substitutionsgrad z besitzen, großflächigere amorphe Bereiche und auch größere Si₃N₄-Kristallite aufweisen, die außerdem durch eine Vielzahl von Spannungskonturen gekennzeichnet sind, möglicherweise ein Hinweis auf Gefügeeigenspannungen, die einen Einfluß auf die mechanischen Eigenschaften ausüben können.

Es ist bekannt, daß Gefügeeigenspannungen während der Abkühlphase polykristalliner Werkstoffe, die keine kubische Gitterstruktur besitzen, bereits durch unterschiedliche Lageorientierung benachbarter Kristallite entstehen. Unterschiedliche thermische Ausdehnungskoeffizienten in verschiedenen kristallographischen Richtungen und zwischen verschiedenen Phasen können dabei diesen Effekt verstärken.

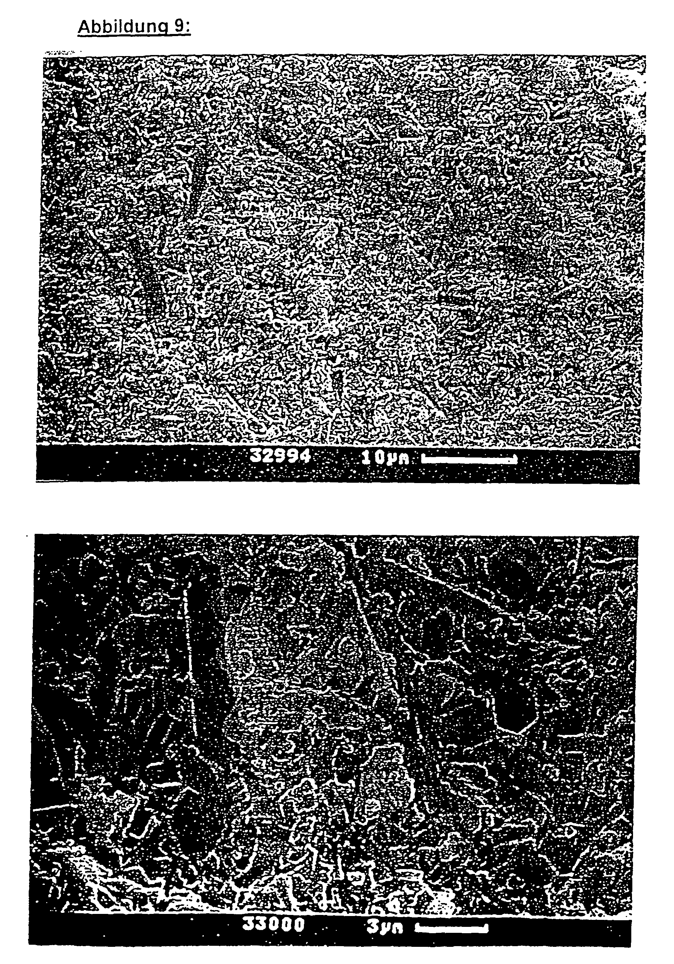

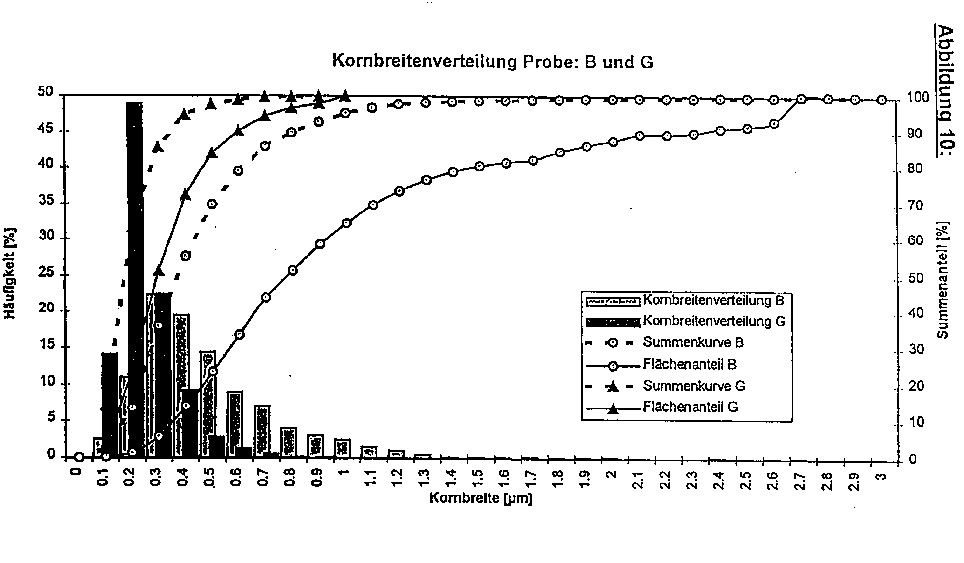

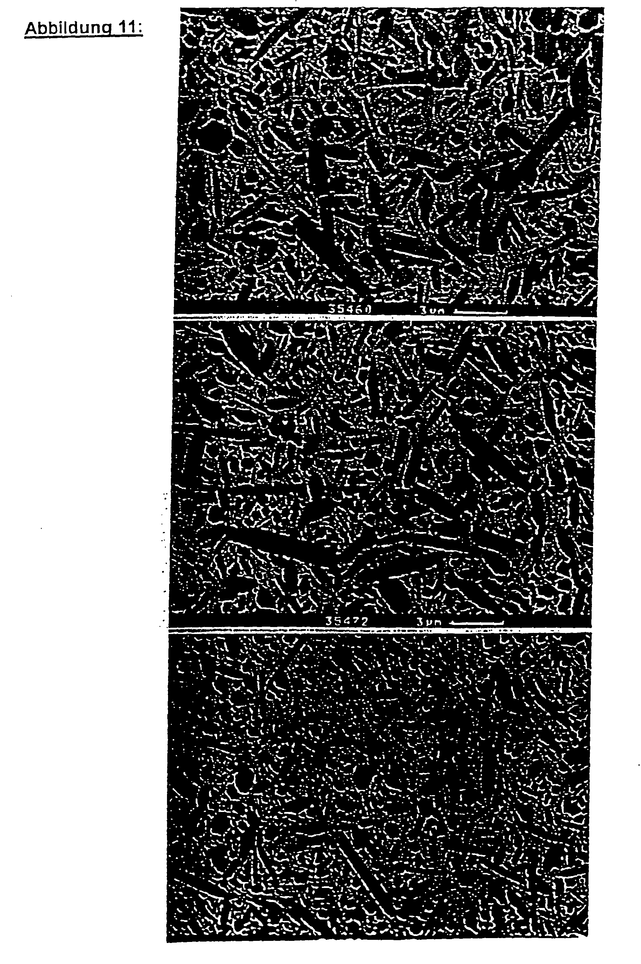

Fraktographische Untersuchungen der erfindungsgemäß hergestellten Keramiken zeigen vorwiegend bei Proben mit Biegefestigkeiten kleiner als 500 MPa (Prüftemperatur : 1000°C) am Bruchspiegel in der Umgebung des Bruchursprunges in charakteristischer Weise große Nadelkristallite mit ca. 8 - 10 µm Kornlänge und 1,5 - 2,5 µm Kornbreite (Abbildung 9). Die stärkere Vergrößerung zeigt Debonding- und Pullout- Erscheinungen größerer Kristallite sowohl längs als auch senkrecht zur Bildebene. Je weiter solche Defekte von der bei der mechanischen Prüfung vorliegenden Oberfläche (Zugseite) entfernt sind, desto höher ist die Wahrscheinlichkeit, daß das Material Zugeigenspannungen aufweist. Senkrecht zur Längserstreckung des beim Bruchvorgang an diesem Teilstück "herausgezogenen" großen Kristallites ist ein Riß zu erkennen, der sowohl durch Sekundärrißentstehung als auch durch thermische Spannungen hervorgerufen worden sein könnte (siehe Pfeile von Bild 14). Hierbei handelte es sich um das Material D (gesintert bei 1850°C).

Als Haupteinflußfaktoren für die mechanische Festigkeit der erfindungsgemäßen Keramiken im Temperaturbereich bis 1000°C sind überraschenderweise Mikrostrukturparameter, nämlich die Kristallitgröße, der unterschiedliche Substitutionsgrad der β'-Sialone bzw. dessen Einfluß auf die Absolutwerte der thermischen Ausdehnungskoeffizienten und die Unterschiede der Wärmeausdehnungskoeffizienten von amorpher Phase und Si₃N₄-Kristalliten sowie in verschiedenen kristallographischen Richtungen der Siliciumnitrid-Nadelkristallite verantwortlich.

Die Ergebnisse der statistischen Mikrostrukturuntersuchungen mittels automatischer Bildanalyse von plasmageätzten Anschliffen sind in Tabelle 4 und Abbildung 10 dargestellt. Der bereits an STEM-Bildern erkannte Trend der feinkristallineren Gefüge von Al₂O₃-reicheren Proben wird damit bestätigt. Die Unterschiede der mittleren Kornbreite, die aus der Summenhäufigkeit der Kristallitanzahl ermittelt wurden, sind bei den Proben B bis E relativ gering. Deutlicher sind die Differenzen bei der Analyse der Flächenanteile von Kristalliten > 8 µm Kornlänge und > 2 µm Kornbreite, die mit steigendem Yttriumgehalt deutlich größer werden und bei der feinkristallinen Probe G nicht mehr enthalten sind. Dies sind für die mechanischen Festigkeiten entscheidende Einflußfaktoren.

Durch die statistische Mikrostrukturanalyse und die Bewertung der Flächenanteile der größeren Kristallite konnte nachgewiesen werden:

Die gößeren Kristallite wirken sich überraschenderweise kaum auf die Raumtemperaturfestigkeit, aber entscheidend auf die Biegefestigkeit bei erhöhten Temperaturen aus. Ursache der Festigkeitsreduzierung sind die durch die Unterschiede und die Anisotropie des linearen thermischen Ausdehnungskoeffizienten der Gefügebestandteile der Siliciumnitridkeramik entstehenden Zugspannungen. Dieser Effekt wird verstärkt durch die Zunahme der Wärmeausdehnung von Kristalliten mit dem geringerem Substitutionsgrad z der yttriumreicheren Werkstoffe, sowie durch deren grobkömigeren Gefüge.

Die grobkristallineren Werkstoffe besitzen geringfügig höhere Bruchzähigkeiten (K_{lc} Werte: Probe D: 8 - 9 MPa, m^{1/2}; Probe E: ca. 7 MPa - m^{1/2}). Damit können die bei Temperaturerhöhungen auftretenden Spannungen und die bei Überschreitung der Werkstoffestigkeit entstehende Rißausbreitung nicht kompensiert werden.

Durch die vorliegende Erfindung wurde also überraschenderweise festgestellt, daß durch den erhöhten Al₂O₃-Gehalt der erfindungsgemäßen Keramiken die Biegefestigkeit in einem erweiterten Temperaturbereich verbessert wird. Bei den erfindungsgemäß vorgesehenen erhöhten Al₂O₃-Gehalten nimmt bei entsprechenden Sinterbedingungen überraschenderweise der Anteil der in den Si₃N₄-Kristalliten gelösten Al³⁺-lonen überproportional zu. Dadurch reduziert sich der Al₂O₃-Anteil in der Glasphase gegenüber dessen Anfangsgehalt in der Pulvermischung. Dies Ergebnis ist umso bemerkenswerter, als nach der allgemeinen Vorstellung mit Al₂O₃-reichen Sinteradditven keine Siliciumnitride mit hohen mechanischen Festigkeiten bei erhöhten Temperaturen hergestellt werden können (z. B. bei Hirosaki, N. et al. Journ. of Material Science 25 (1990) 1872-1876).

Außerdem wurde gefunden, daß durch Lösen von Stickstoff in der Glasphase etwa 1/6 des im SiO₂ enthaltenen Sauerstoffes durch Stickstoff substituiert wird. In erster Näherung können diese amorphen Phasen weiterhin als Silikatgläser mit SiO₂ und Oxidzusätzen betrachtet werden (Oda und Yoshio (s.o) und Braue, et al. J. Brit. Ceram. Soc. 37 (1986) 71-80). Auf diese Weise können die Veränderungen der chemischen Zusammensetzung von der Ausgangsmischung der Sinteradditive bis zu der aus der Schmelzphase während der Abkühlphase des Sinterprozesses gebildeten amorphen Phase ebenfalls im Phasendiagramm gemäß Abbildung 4 dargestellt werden, sofern etwa gleiche N-Gehalte vorliegen.

Die Substitution von Si⁴⁺-Ionen durch Al³⁺ in den Si₃N₄-Kristalliten, die ebenfalls mit der Substitution von Stickstoff- durch Sauerstoffionen verbunden ist, wird mit Hilfe des Substitutionsgrades z entsprechend der Formel Si_{6-z}Al_{z}O_{z}N_{8-z} charakterisiert.

Gemäß Stand der Technik soll der Schmelzpunkt und die Viskosität der in diesen Werkstoffen enthaltenen amorphen Phase des Systems Y₂O₃-Al₂O₃-SiO₂ wesentlich die mechanischen Eigenschaften bei erhöhten Temperaturen bestimmen. Überraschenderweise wurde jedoch festgestellt, daß die erfindungsgemäßen Keramiken mit einer chemischen Zusammensetzung der amorphen Phase, deren Liquidustemperatur im Dreistoffsystem Y₂O₃-Al₂O₃-SiO₂ bei niedrigeren Temperaturen liegt, trotzdem höhere Biegefestigkeiten bei 1000°C aufweisen (siehe Tabelle1 und Bild 1 von Anlage 1; Vergleich der Materialien E',F';G' mit B',C',D').

Das bedeutet, daß überraschenderweise über die Einstellung des Ausgangs-Al₂O₃-Gehaltes und des Substitutionsgrades z die mechanische Festigkeit vor allem bei erhöhten Temperaturen kontrolliert und erhöht werden kann. Auch die Raumtemperaturfestigkeit wird dadurch positiv beeinflußt, sofern die Dichtsinterung der Formkörper 97,5 % der theoretisch möglichen Dichte erreicht wird, was durch Sintertemperaturanpassung erfolgen kann. Dies trifft für die Ausgangsmischungen ohne Al₂O₃(Punkt A des Phasendiagrammes von Bild 1) und ohne Y₂O₃ (Punkt H) wegen der unzureichenden Flüssigphasenbildung und der daraus resultierenden schlechteren Sinterverdichtung nicht zu.

Auch die Unterschiede der Ausdehnungskoeffizienten von amorpher Korngrenzenphase und den Si₃N₄-Kristalliten können beim Aufheizen und Abkühlen dieser Werkstoffe zu thermischen Spannungen führen, die die mechanische Festigkeit beeinflussen. Die erfindungsgemäß erzielte Veränderung des Substitutionsgrades und der thermischen Dehnung der Matrixkristallite kann durch eine verbesserte Anpassung der Ausdehnungskoeffizienten der Gefügekomponenten einen Beitrag zur Festigkeitserhöhung leisten.

Die Bruchzähigkeiten (K_{lc}-Werte) der erfindungsgemäßen Werkstoffe liegen im Bereich von 7-8 MPa·m^{1/2} bei Raumtemperatur und 5-7 MPa·m^{1/2} bei 1000°C. Sie bilden eine weitere Voraussetzung für die Langzeit-Zuverlässigkeit dieser Materialien unter Anwendungsbedingungen. Sie sind deshalb für den Einsatz im Maschinen- und Anlagenbau, insbesondere im Motorenbau gut geeignet.

Die Abbildungen zeigen:

| | |
|---|---|
| Abbildung 1: | Dreistoffsystem Y₂O₃-Al₂O₃-SiO₂; |
| Abbildung 2: | Sinterdichten gasdruckgesinterter Proben in Abhängigkeit vom Al₂O₃; |
| Abbildung 3: | Abhängigkeit der mechanischen Festigkeit vom Al₂O₃-Gehalt; |
| Abbildung 4: | Dreistoffsystem Y₂O₃-Al₂O₃-SiO₂; |
| Abbildung 5: | Korrelation zwischen Liquidustemperatur der Glasphase und Hochtemperaturbiegefestigkeit (1000°C); |
| Abbildung 6: | Mechanische Festigkeit als Funktion vom Substitutionsgrad (z): |
| Abbildung 7: | STEM-Bilder der Probe A (oben) und B (unten); |
| Abbildung 8: | STEM-Bilder der Probe E (oben) und G (unten); |
| Abbildung 9: | REM-Bilder einer Bruchfläche von Prrobe D (Prüftemperatur 1000°C); |
| Abbildung 10: | Kristallitgrößenverteilung (Kornbreite; Probe B und G); |
| Abbildung 11: | Mikrostruktur plasmageätzter Anschliffe (REM; Probe B (oben), Probe D (Mitte), Probe G (unten)); |

Die nachfolgenden Beispiele sollen die Erfindung näher erläutern, ohne sie einzuschränken.

### Beispiel 1 (Vergleichsbeispiel; Punkt C von Bild 1)

Es werden Mischungen von Pulvern aus 90 Gew.-% Si₃N₄ mit einem Sauerstoffgehalt von 1,3 % und einer spezifischen Oberfläche von 12 m²/g sowie 2,5 Gew.-% Al₂O₃ und 7,5 % Gew.-Y₂O₃ hergestellt. Dies entspricht einem Y₂O₃/Al₂O₃-Verhältnis von 3 (Pkt. C von Bild 1). Diese Mischung wurde in einer Rührwerkskugelmühle in wäßriger Suspension 3h lang gemischt und gemahlen. Nach Beendigung der Mahlung wurden dem Schlicker 2 Gew.-% Plastifizierungsmittel in Form von Polyvinylalkohol (Mowiol GE 04/86) und Polyethylenglykol mit einem Molekulargewicht von 400 im Verhältnis 1:1 zugemischt und in einem Sprühtrockner mit Zweistoffdüse bis auf eine Restfeuchte von 0,8 % getrocknet und granuliert.

Die Formkörper wurden mittels isostatischem Pressen bei einem Preßdruck von 2000 bar hergestellt. Die Sinterung erfolgte 2 Stunden bei einer Temperatur von 1875°C und einem maximalen Stickstoffdruck von 80 bar. Aus den Formkörpern wurden mittels Schleifen, Läppen und Polieren Biegeprüfkörper der Abmessungen 3mm x 4mm x 45mm hergestellt. Damit erfolgte die Prüfung der Vierpunktbiegefestigkeit nach DIN 51 110 bei Raumtemperatur und bei einer Temperatur von 1000°C. Die Prüfergebnisse sind in Tabelle 1 dargestellt.

### Beispiel 2 (Vergleichsbeispiel; Punkt D von Bild 1)

Die Pulvermischung bestand aus 90 Gew.-% Si₃N₄, 3,3 Gew.-% Al₂O₃ und 6,7 Gew.-% Y₂O₃. Dies entspricht einem Y₂O₃/Al₂O₃-Verhältnis von ca. 2. Alle weiteren Verfahrens-und Prüfprozesse entsprachen denen von Beispiel 1 (Festigkeitsprüfergebnisse siehe Tabelle 1).

### Beispiel 3 (erfindungsgemäß; Punkt E von Bild 1)

Es wurde folgende Pulvermischung angefertigt: 90 Gew.-% Si₃N₄, 5,0 Gew.-% Al₂O₃und 5,0 Gew.-% Y₂O₃. Dies entspricht einem Y₂O₃/Al₂O₃-Verhältnis von 1,0. Alle weiteren Verfahrens- und Prüfprozesse entsprachen denen von Beispiel 1 (Festigkeitsprüfergebnisse siehe Tabelle 1).

### Beispiel 4 (erfindungsgemäß; Punkt F von Bild 1)

Es wurde folgende Pulvermischung hergestellt: 89,6 Gew.-% Si₃N₄, 6,25 Gew.-% Al₂O₃, 3,75 Gew.-% Y₂O₃ und 0,4 Gew.-% HfO₂. Dies entspricht einem Y₂O₃+ HfO₂/Al₂O₃-Verhältnis von 0,61.
Alle weiteren Verfahrens- und Prüfprozesse entsprachen denen von Beispiel 1 (Festigkeitsprüfergebnisse siehe Tabelle 1).

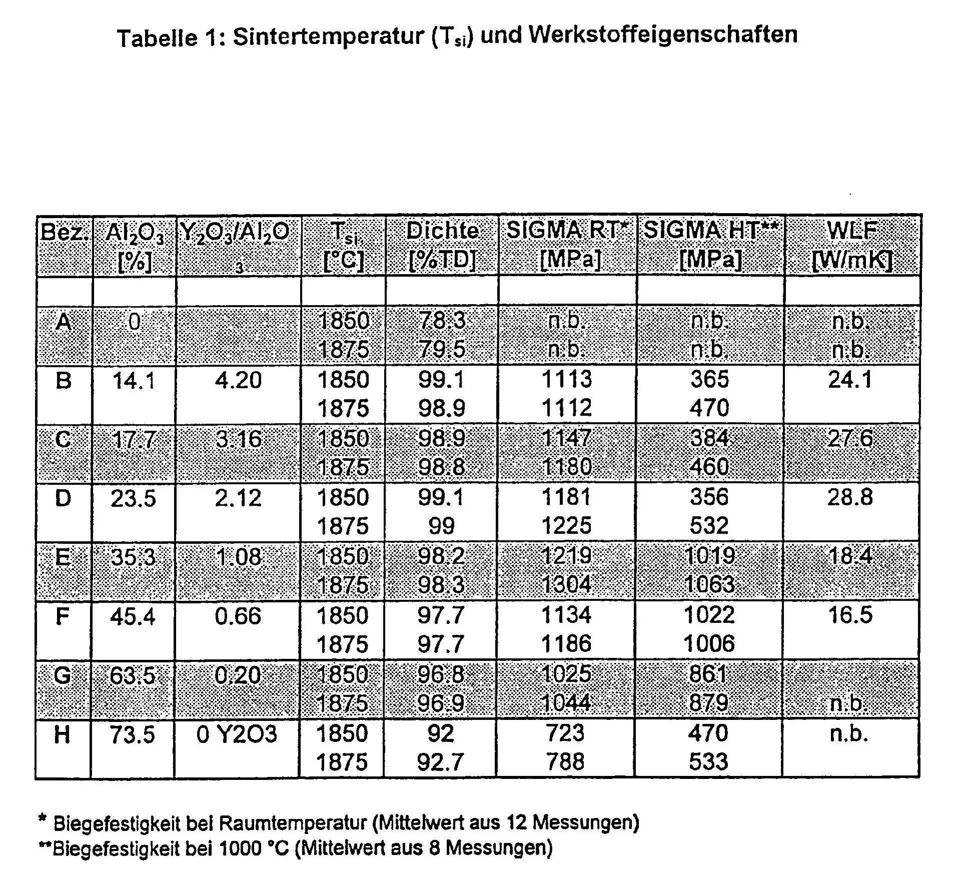

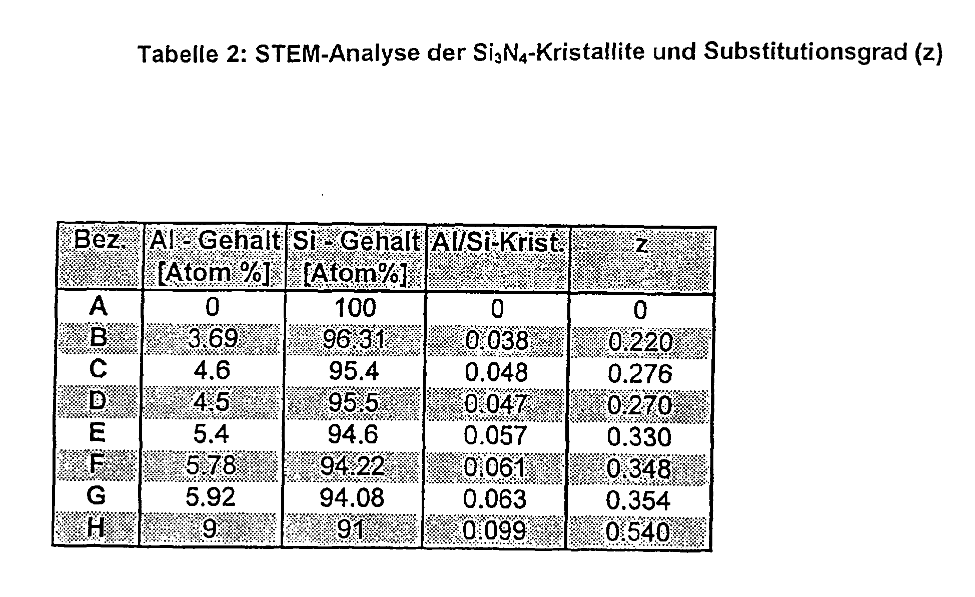

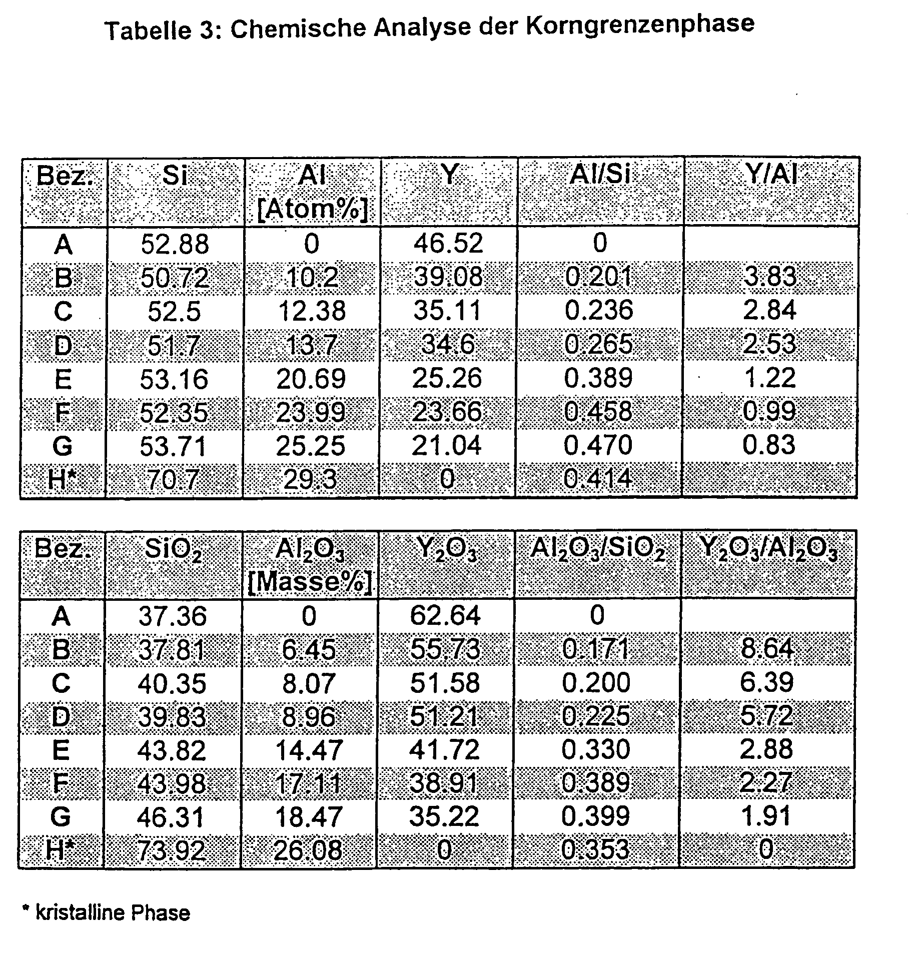

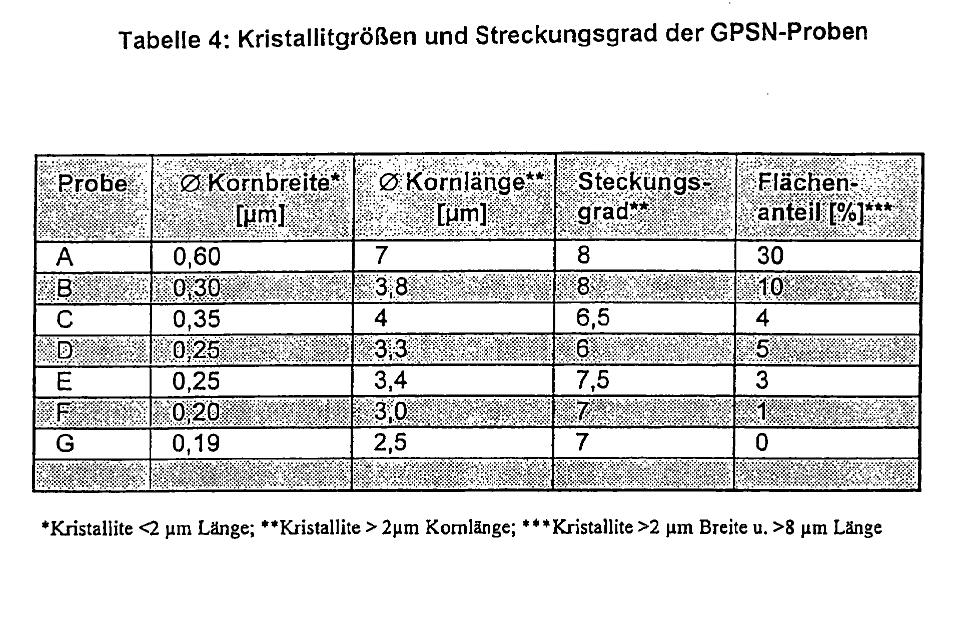

## Patentansprüche

1. Formteil aus gesinterter Siliciumnitridkeramik mit erhöhter mechanischer Festigkeit bei Raumtemperatur und bei erhöhten Temperaturen, **dadurch gekennzeichnet, dass** es der Formel Si_{6-z}Al_{z}O_{z}N_{8-z} entspricht, wobei der Substitutionsgrad z 0,20 bis 0,60 beträgt, dass es wenigstens 87 Gew.-% Siliziumnitrid und bis zu 13 Gew.-% einer Additivkombination aus Al₂O₃ und Y₂O₃ enthält, dass das Masseverhältnis der Additive Y₂O₃/Al₂O₃ kleiner als 1,1 ist und dass die Biegefestigkeit ≥ 1.100 Mpa bei Raumtemperatur und ≥ 850 MPa·bei 1000°C beträgt.

2. Formteil gemäß Anspruch 1, **dadurch gekennzeichnet, dass** 1% bis 20 % des Y₂O₃-Anteiles durch ein anderes Element der Gruppe IVb des Periodensystemes bzw. durch dessen Oxid substituiert ist.

3. Formteil gemäß Anspruch 1 oder 2, **dadurch gekennzeichnet, dass** es bis zu 1,0 Gew.-% HfO₂ und/oder ZrO₂ enthält.

4. Formteil gemäß einem der Ansprüche 1 bis 3, **dadurch gekennzeichnet, dass** das Masseverhältnis der Additive Y₂O₃/Al₂O₃ 0,2 bis 1,09 beträgt.

5. Formteil gemäß einem der Ansprüche 1 bis 4, **dadurch gekennzeichnet, dass** es eine Dichte von > 98 % der theoretischen Dichte aufweist.

6. Formteil gemäß einem der Ansprüche 1 bis 5, **dadurch gekennzeichnet, dass** der Substitutionsgrad z von 0,22 bis 0,54, vorzugsweise von 0,3 bis 0,35 reicht.

7. Formteil gemäß einem der Ansprüche 1 bis 6, **dadurch gekennzeichnet, dass** die Bruchzähigkeit K_{IC} > 6,5 MPa·m^{1/2} bei Raumtemperatur und > 5 MPa·m^{1/2} bei 1000°C beträgt.

8. Verfahren zur Herstellung eines Formteilsgemäß einem der Ansprüche 1 bis 7, **dadurch gekennzeichnet, dass** Siliciumnitridrohmaterial mit einem Ausgangssauerstoffgehalt von 1,3 % und bis zu 13 Gew.-% einer Additivkombination aus Al₂O₃ und Y₂O₃ als Sinteradditive in einem flüssigen Dispergiermittel gemischt, gemahlen, plastifiziert und anschließend sprühgetrocknet wird, dass erhaltene Agglomerat zu Formkörpern gepreßt, die Preßteile ausgeheizt und nachfolgend bei Temperaturen zwischen 1800 und 1900°C, vorzugsweise bei Temperaturen zwischen 1850 und 1875°C gesintert wird.

9. Verfahren gemäß Anspruch 8, **dadurch gekennzeichnet, dass** 1 % bis 20 % des Y₂O₃-Anteiles durch ein anderes Element der Gruppe IVb des Periodensystemes bzw. durch dessen Oxid substituiert ist.

10. Verfahren gemäß Anspruch 8 oder 9, **dadurch gekennzeichnet, dass** die Mischung zusätzlich bis zu 1,0 Gew.-% HfO₂ und/oder ZrO₂ enthält.

11. Verfahren gemäß einem der Ansprüche 8 bis 10, **dadurch gekennzeichnet, dass** das Masseverhältnis der Additive Y₂O₃/Al₂O₃ 0,2 bis 1,09 beträgt.

12. Verfahren gemäß einem der Ansprüche 8 bis 11, **dadurch gekennzeichnet, dass** das Pressen der Formkörper oberhalb 1500 barund/oder das Sintern in einem Gasdrucksinterofen bei einem maximalen Stickstoffdruck von 80 bar erfolgt.

13. Verwendung von Formteilen gemäß einem der Ansprüche 1 bis 7 im Maschinen- und Anlagen- sowie im Verbrennungsmotorenbau.

## Claims

1. A shaped body of sintered silicon nitride ceramic with high mechanical strength at room temperature and at elevated temperatures, **characterised in that** it corresponds to the formula Si_{6-z}Al_{z}O_{z}N_{8-z} wherein the degree of substitution z is 0.20 to 0.60, that it contains at least 87 wt.% of silicon nitride and up to 13 wt.% of an additive combination of Al₂O₃ and Y₂O₃, that the mass ratio of the additives Y₂O₃/Al₂O₃ is less than 1.1 and that the bending strength is ≥ 1100 MPa at room temperature and ≥ 850 MPa at 1000°C.

2. A shaped body according to claim 1, **characterised in that** 1% to 20% of the Y₂O₃ fraction is replaced by another element of Group IVb of the periodic system or by an oxide thereof.

3. A shaped body according to claim 1 or 2, **characterised in that** it contains up to 1.0 wt.% HfO₂ and/or ZrO₂.

4. A shaped body according to one of claims 1 to 3, **characterised in that** the mass ratio of the additives Y₂O₃/Al₂O₃ is 0.2 to 1.09.

5. A shaped body according to one of claims 1 to 4, **characterised in that** it has a density of >98% of the theoretical density.

6. A shaped body according to one of claims 1 to 5, **characterised in that** the degree of substitution z is 0.22 to 0.54, preferably 0.3 to 0.35.

7. A shaped body according to one of claims 1 to 6, **characterised in that** the fracture toughness K_{ic} is > 6.5 MPa·m^{½} at room temperature and > 5 MPa·m^{½} at 1000°C.

8. A process for producing a shaped body according to one of claims 1 to 7, **characterised in that** silicon nitride raw material having an initial oxygen content of 1.3% and up to 13 wt.% of an additive combination of Al₂O₃ and Y₂O₃ is mixed as sintering additive in a liquid dispersing agent, ground, plasticised and then spray dried, the resultant agglomerate is compressed into shaped pieces, and the pressed parts are baked and then sintered at temperatures between 1800°C and 1900°C, preferably at temperatures between 1850°C and 1875°C.

9. A process according to claim 8, **characterised in that** 1% to 20% of the Y₂O₃ fraction is replaced by another element of Group IVb of the periodic system or by an oxide thereof.

10. A process according to claim 8 or 9, **characterised in that** the mixture additionally contains up to 1.0 wt.% HfO₂ and/or ZrO₂.

11. A process according to one of claims 8 to 10, **characterised in that** the mass ratio of the additives Y₂O₃/Al₂O₃ is 0.2 to 1.09.

12. A process according to one of claims 8 to 11, **characterised in that** the compression of the shaped pieces is carried out above 1500 bar and/or the sintering is carried out in a gas-fired pressure sintering furnace at a maximum nitrogen pressure of 80 bar.

13. Use of shaped bodies according to one of claims 1 to 7 in machinery and plant construction as well as in combustion engine manufacture.

## Revendications

1. Pièce moulée en céramique au nitrure de silicium fritté, ayant une résistance mécanique élevée à la température ordinaire et aux températures élevées, **caractérisée en ce qu'**elle répond à la formule Si_{8-z}Al_{z}O_{z}N_{8-z} où le degré de substitution z vaut de 0,20 à 0,60, elle contient au moins 87 % en poids de nitrure de silicium et jusqu'à 13 % en poids d'une combinaison d'adjuvants constituée de Al₂O₃ et de Y₂O₃, le rapport pondéral des adjuvants Y₂O₃/Al₂O₃ est inférieur à 1/1, et la résistance à la flexion est supérieure ou égale à 1100 MPa à la température ordinaire et supérieure ou égale à 850 MPa à 1000°C.

2. Pièce moulée selon la revendication 1, **caractérisée en ce que** la fraction de Y₂O₃ est remplacée en une proportion de 1 % à 20 % par un autre élément du groupe IVb du système périodique ou par un oxyde d'un tel élément.

3. Pièce moulée selon la revendication 1 ou 2, **caractérisée en ce qu'**elle contient jusqu'à 1,0 % en poids de HfO₂ et/ou de ZrO₂.

4. Pièce moulée selon l'une des revendications 1 à 3, **caractérisée en ce que** le rapport pondéral des adjuvants Y₂O₃/Al₂O₃ vaut de 0,2 à 1,09.

5. Pièce moulée selon l'une des revendications 1 à 4, **caractérisée en ce qu'**elle présente une densité égale à plus de 98 % de la densité théorique.

6. Pièce moulée selon l'une des revendications 1 à 5, **caractérisée en ce que** le degré de substitution z vaut de 0,22 à 0,54 et de préférence, de 0,3 à 0,35.

7. Pièce moulée selon l'une des revendications 1 à 6, **caractérisée en ce que** la ténacité à la rupture K_{IC} est supérieure à 6,5 MPa.m^{1/2} à la température ordinaire et supérieure à 5 MPa.m^{1/2} à 1000°C.

8. Procédé de fabrication d'une pièce moulée selon l'une des revendications 1 à 7, **caractérisé en ce que** l'on mélange, dans un milieu de dispersion liquide, une matière première au nitrure de silicium ayant une teneur initiale en oxygène de 1,3 %, et jusqu'à 13 % en poids d'une combinaison d'adjuvants constituée de Al₂O₃ et de Y₂O₃ en tant qu'adjuvants de frittage, on broie et on plastifie le mélange obtenu, et on le fait ensuite sécher par pulvérisation, et **en ce que** l'on moule le produit aggloméré obtenu en le comprimant sous la forme de corps façonnés, on chauffe les pièces moulées par compression et on les fritte ensuite à des températures de 1800 à 1900°C et de préférence, à des températures de 1850 à 1875°C.

9. Procédé selon la revendication 8, **caractérisé en ce que** la fraction de Y₂O₃ est remplacée en une proportion de 1 % à 20 % par un autre élément du groupe IVb du système périodique ou par un oxyde d'un tel élément.

10. Procédé selon la revendication 8 ou 9, **caractérisé en ce que** le mélange contient en outre jusqu'à 1,0 % en poids de HfO₂ et/ou de ZrO₂.

11. Procédé selon l'une des revendications 8 à 10, **caractérisée en ce que** le rapport pondéral des adjuvants Y₂O₃/Al₂O₃ vaut de 0,2 à 1,09.

12. Procédé selon l'une des revendications 8 à 11, **caractérisée en ce que** le moulage par compression des corps façonnés est réalisé sous une pression supérieure à 1500 bars et/ou le frittage est effectué dans un four d'agglomération sous pression, à une pression d'azote maximale de 80 bars.

13. Utilisation de pièces moulées selon l'une des revendications 1 à 7 dans la construction de machines et d'équipements, et dans la construction de moteurs thermiques.
